# EUROPEAN PATENT APPLICATION

(11) **EP 4 395 444 A1**
(43) Date of publication of application: **03.07.2024**
(21) Application number: 22860361.9
(22) Date of filing: 18.08.2022
(51) Int. Cl.: H04W 74/08

(54) **RANDOM ACCESS RESOURCE SELECTION AND CONFIGURATION METHODS, APPARATUS, TERMINAL, AND NETWORK SIDE DEVICE**

(30) Priority: 23.08.2021 CN 202110969321
(71) Applicant: Vivo Mobile Communication Co., Ltd., Dongguan, Guangdong 523863 (CN)
(72) Inventor: MO, Yitao, Dongguan, Guangdong 523863 (CN); LIU, Siqi, Dongguan, Guangdong 523863 (CN); YANG, Xiaodong, Dongguan, Guangdong 523863 (CN)
(74) Representative: Conti, Marco
(86) International application number: PCT/CN2022/113219
(87) International publication number: WO 2023/025015

(57) **Abstract**

This application pertains to the field of communication technologies and discloses a random access resource selection method and apparatus, a random access resource configuration method and apparatus, a terminal, and a network side device. The random access resource selection method is performed by a terminal and includes: receiving configuration information sent by a network side device, where the configuration information is used to indicate an association relationship between a random access resource configured by the network side device and a first characteristic; and selecting a random access resource based on the configuration information and a second characteristic supported by the terminal, where the random access resource includes at least one of the following: a downlink reference signal, a carrier, a bandwidth part, a random access type, a random access preamble, a random access preamble group, and a random access occasion.

## Description

### CROSS-REFERENCE TO RELATED APPLICATIONS

This application claims priority to Chinese Patent Application No. 202110969321.2, filed on August 23, 2021 in China, which is incorporated herein by reference in its entirety.

### TECHNICAL FIELD

This application relates to the field of communication technologies, and in particular, to a random access resource selection method and apparatus, a random access resource configuration method and apparatus, a terminal, and a network side device.

### BACKGROUND

In an existing new radio (New Radio, NR) system, a separate random access resource is allocated on a network side to a terminal supporting small data transmission/reduced capability NR devices/coverage enhancement and of which network configuration information includes access network slicing allocation information. However, in a conventional related technology, there is no content concerning random access resource selection. To ensure that the terminal can select a suitable random access resource from a plurality of random access resources and ensure that a network side device can accurately identify a service requirement of and a characteristic supported by the terminal, a random access resource selection method needs to be devised.

### SUMMARY

Embodiments of this application provide a random access resource selection method and apparatus, a random access resource configuration method and apparatus, a terminal, and a network side device, to ensure that a terminal can select a suitable random access resource from a plurality of random access resources.

According to a first aspect, an embodiment of this application provides a random access resource selection method, performed by a terminal and including:
receiving configuration information sent by a network side device, where the configuration information is used to indicate an association relationship between a random access resource configured by the network side device and a first characteristic; and
selecting a random access resource based on the configuration information and a second characteristic supported by the terminal.

The random access resource includes at least one of the following:
a downlink reference signal, a carrier, a bandwidth part, a random access type, a random access preamble, a random access preamble group, and a random access occasion.

According to a second aspect, an embodiment of this application provides a random access resource configuration method, performed by a network side device and including:
sending configuration information to a terminal, where the configuration information is used to indicate an association relationship between a random access resource configured by the network side device and a first characteristic.

The random access resource includes at least one of the following:
a downlink reference signal, a carrier, a bandwidth part, a random access type, a random access preamble, a random access preamble group, and a random access occasion.

According to a third aspect, an embodiment of this application provides a random access resource selection apparatus, used in a terminal and includes:
a receiving module, configured to receive configuration information sent by a network side device, where the configuration information is used to indicate an association relationship between a random access resource configured by the network side device and a first characteristic; and
a selection module, configured to select a random access resource based on the configuration information and a second characteristic supported by the terminal.

The random access resource includes at least one of the following:
a downlink reference signal, a carrier, a bandwidth part, a random access type, a random access preamble, a random access preamble group, and a random access occasion.

According to a fourth aspect, an embodiment of this application provides a random access resource configuration apparatus, used in a network side device and includes:
a sending module, configured to send configuration information to a terminal, where the configuration information is used to indicate an association relationship between a random access resource configured by the network side device and a first characteristic.

The random access resource includes at least one of the following:
a downlink reference signal, a carrier, a bandwidth part, a random access type, a random access preamble, a random access preamble group, and a random access occasion.

According to a fifth aspect, a terminal is provided. The terminal includes a processor, a memory, and a program or an instruction that is stored in the memory and that is executable on the processor. When the program or the instruction is executed by the processor, steps of the method according to the first aspect are implemented.

According to a sixth aspect, a terminal is provided. The terminal includes a processor and a communication interface. The processor is configured to: receive configuration information sent by a network side device, where the configuration information is used to indicate an association relationship between a random access resource configured by the network side device and a first characteristic; and select a random access resource based on the configuration information and a second characteristic supported by the terminal.

The random access resource includes at least one of the following:
a downlink reference signal, a carrier, a bandwidth part, a random access type, a random access preamble, a random access preamble group, and a random access occasion.

According to a seventh aspect, a network side device is provided. The network side device includes a processor, a memory, and a program or an instruction that is stored in the memory and that is executable on the processor. When the program or the instruction is executed by the processor, steps of the method according to the second aspect are implemented.

According to an eighth aspect, a network side device is provided. The network side device includes a processor and a communication interface. The communication interface is configured to send configuration information to a terminal, where the configuration information is used to indicate an association relationship between a random access resource configured by the network side device and a first characteristic.

The random access resource includes at least one of the following:
a downlink reference signal, a carrier, a bandwidth part, a random access type, a random access preamble, a random access preamble group, and a random access occasion.

According to a ninth aspect, a readable storage medium is provided. The readable storage medium stores a program or an instruction, and when the program or the instruction is executed by a processor, steps of the method according to the first aspect or the second aspect are implemented.

According to a tenth aspect, a chip is provided. The chip includes a processor and a communication interface. The communication interface is coupled to the processor, and the processor is configured to run a program or an instruction to implement steps of the method according to the first aspect or the second aspect.

According to an eleventh aspect, a computer program/program product is provided. The computer program/program product is stored in a non-volatile storage medium, and the program/program product is executed by at least one processor to implement steps of the method according to the first aspect or the second aspect.

According to a twelfth aspect, a communication device is provided. The communication device is configured to implement steps of the method according to the first aspect or the second aspect.

In the embodiments of this application, the terminal receives the configuration information sent by the network side device, and selects the random access resource based on the configuration information and the second characteristic supported by the terminal, to ensure that the terminal can select a suitable random access resource from a plurality of random access resources and ensure that the network side device can accurately identify a service requirement of and a characteristic supported by the terminal.

### BRIEF DESCRIPTION OF DRAWINGS

FIG. 1 is a schematic diagram of a wireless communication system;
FIG. 2 is a schematic flowchart of random access resource selection;
FIG. 3 is a schematic diagram of a manner of random access preamble (Preamble) division;
FIG. 4 is a schematic flowchart of a random access resource selection method performed by a terminal according to an embodiment of this application;
FIG. 5 is a schematic flowchart of a random access resource configuration method performed by a network side device according to an embodiment of this application;
FIG. 6 is a schematic diagram of a structure of a random access resource selection apparatus used in a terminal according to an embodiment of this application;
FIG. 7 is a schematic diagram of a structure of a random access resource configuration apparatus used in a network side device according to an embodiment of this application;
FIG. 8 is a schematic diagram of a structure of a communication device according to an embodiment of this application;
FIG. 9 is a schematic diagram of composition of a terminal according to an embodiment of this application; and
FIG. 10 is a schematic diagram of composition of a network side device according to an embodiment of this application.

### DESCRIPTION OF EMBODIMENTS

The following clearly describes technical solutions in embodiments of this application with reference to the accompanying drawings in the embodiments of this application. Clearly, the described embodiments are some of but not all the embodiments of this application. All other embodiments obtained by a person of ordinary skill in the art based on the embodiments of this application shall fall within the protection scope of this application.

The terms "first", "second", and the like in the description and the claims of this application are used to distinguish between similar objects instead of describing a specific order or sequence. It should be understood that, the terms used in such a way are interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the specification and the claims, "and/or" represents at least one of connected objects, and the character "/" generally represents an "or" relationship between associated objects.

It should be noted that, the technologies described in the embodiments of this application are not limited to a long term evolution (Long Term Evolution, LTE)/LTE-advanced (LTE-Advanced, LTE-A) system, and can also be used in other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and another system. The terms "system" and "network" in the embodiments of this application may be used interchangeably. The technologies described herein can be applied to both the systems and the radio technologies mentioned above as well as to other systems and radio technologies. The following describe a new radio (New Radio, NR) system as an example, and terminology in NR are used in most of the following descriptions, but these technologies may alternatively be applied to an application other than an NR system application, for example, a 6^{th} generation (6th Generation, 6G) communication system.

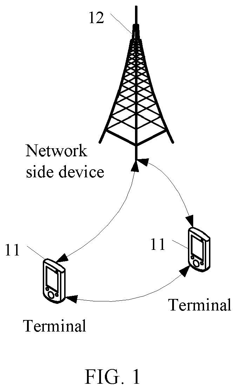

FIG. 1 is a block diagram of a wireless communication system to which embodiments of this application can be applied. The wireless communication system includes a terminal 11 and a network side device 12. The terminal 11 may also be referred to as a terminal device or user equipment (User Equipment, UE). The terminal 11 may be a terminal side device, for example, a mobile phone, a tablet personal computer (Tablet Personal Computer), a laptop computer (Laptop Computer) or notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device), vehicle user equipment (Vehicle User Equipment, VUE), or pedestrian user equipment (Pedestrian User Equipment, PUE). The wearable device includes a smart watch, band, headset, glasses, and the like. It should be noted that a specific type of the terminal 11 is not limited in the embodiments of this application. The network side device 12 may be a base station or a core network device. The base station may be referred to an access point, a base transceiver station (Base Transceiver Station, BTS), a radio base station, a radio transceiver, a basic service set (Basic Service Set, BSS), an extended service set (Extended Service Set, ESS), a Node B, an evolved Node B (Evolved NodeB, eNB), a home Node B, a home evolved Node B, a wireless local area network (Wireless Local Area Network, WLAN) access point, a Wi-Fi node, a transmission and reception point (Transmission and Reception Point, TRP), or another appropriate specific term in the art, provided that same technical effect is achieved. The base station is not limited to a particular technical term. It should be noted that in the embodiments of this application, only a base station in the NR system is used as an example, but a specific type of the base station is not limited. The core network device may be a location management device, for example, a location management function (Location Management Function, LMF), or an evolved serving mobile location center (Evolved Serving Mobile Location Center, E-SMLC).

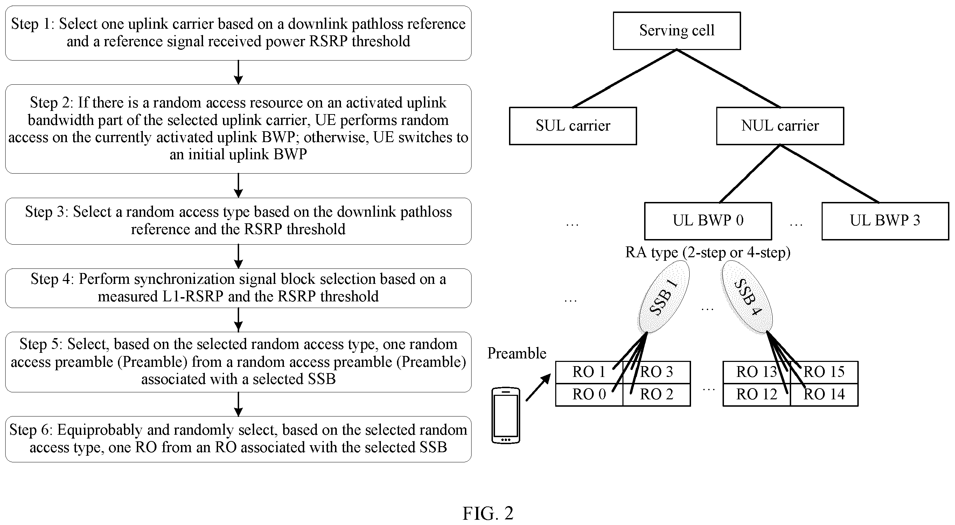

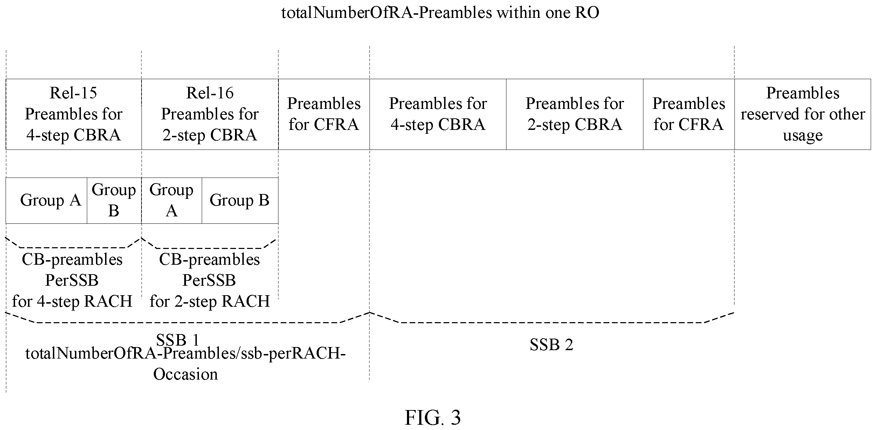

FIG. 2 is a schematic flowchart of random access resource selection. FIG. 3 is a schematic diagram of a manner of random access preamble (Preamble) division. As shown in FIG. 2, random access resource selection includes the following steps.

Step 1 (Step 1): UE first selects one uplink carrier based on a downlink pathloss reference and a reference signal received power (Reference Signal Received Power, RSRP) threshold.

Step 2: If there is a random access resource on an activated uplink bandwidth part (Bandwidth Part, BWP) of the selected uplink carrier, the UE performs random access on the currently activated uplink BWP. Otherwise, the UE switches to an initial uplink BWP.

Step 3: The UE selects a random access type (4-step random access (Random Access, RA) or 2-step RA) based on the downlink pathloss reference and the RSRP threshold.

Step 4: The UE performs synchronization signal block (Synchronization signal block, SSB) selection based on a measured L1-RSRP and the RSRP threshold.

Step 5: The UE selects, based on the selected random access type, one preamble from a preamble associated with a selected SSB.

Step 6: The UE equiprobably and randomly selects, based on the selected random access type, one RO from a random access occasion (Random Access Occasion, RO) associated with the selected SSB.

If the UE selects the 2-step RA type and N times of 2-step RA attempts have failed, the UE changes the 2-step RA type into the 4-step RA type and completes a fallback, and then the UE performs resource selection again based on the 4-step RA type.

In an NR system, a separate access resource is allocated on a network side to UE supporting small data transmission (small data transmission, SDT)/reduced capability NR devices (reduced capability (RedCap) NR devices)/coverage enhancement (coverage enhancement, CovEnh) and radio access network slicing (radio access network slicing, RAN slicing) identifier allocation information configured by a network. To ensure that the UE can select a suitable random access resource from a plurality of random access resources and ensure that a network side device can accurately identify a service requirement of and a characteristic supported by the UE, a random access resource selection method needs to be re-devised.

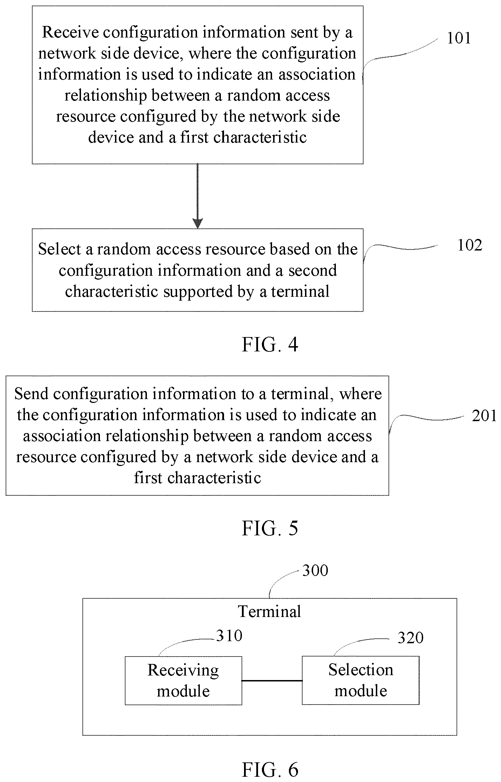

An embodiment of this application provides a random access resource selection method, performed by a terminal. As shown in FIG. 4, the method includes the following steps.

Step 101: Receive configuration information sent by a network side device, where the configuration information is used to indicate an association relationship between a random access resource configured by the network side device and a first characteristic.

Step 102: Select a random access resource based on the configuration information and a second characteristic supported by the terminal.

The random access resource may include at least one of the following:
a downlink reference signal, a carrier (including an uplink carrier and a downlink carrier), a bandwidth part (including an uplink bandwidth part and a downlink bandwidth part), a random access type, a random access preamble, a random access preamble group, and a random access occasion.

In this embodiment of this application, a terminal receives the configuration information sent by the network side device, and selects the random access resource based on the configuration information and the second characteristic supported by the terminal, to ensure that the terminal can select a suitable random access resource from a plurality of random access resources and ensure that the network side device can accurately identify a service requirement of and a characteristic supported by the terminal.

In some embodiments, the downlink reference signal may include any one of the following:
cell measurement symbol;
cell measurement subframe;
cell measurement slot;
frequency measurement symbol;
frequency measurement subframe; and
frequency measurement slot.

In some embodiments, the configuration information may include at least one of the following:
a downlink reference signal associated with a random access resource corresponding to the first characteristic;
random access resource allocation information corresponding to the first characteristic, including at least one of temporal position information, frequency position information, code domain information, and power domain information;
information about enabling the first characteristic;
priority information corresponding to the first characteristic;
a measurement threshold for random access resource selection; and
a configuration parameter for a random access procedure, where
the measurement threshold or the configuration parameter has an association relationship with the first characteristic.

In some embodiments, the first characteristic includes at least one of small data transmission (SDT), a reduced capability (RedCap) NR device, coverage enhancement (CovEnh), radio access network slicing (RAN slicing), two-step random access (2-step RA), and four-step random access (4-step RA). For example, there may be a combination of any combination of at least two of RAN slicing, RedCap, SDT, and CovEnh and either 2-step RA or 4-step RA (to be specific, at least two of RAN slicing, RedCap, SDT, and CovEnh may be selected, and one of 2-step RA and 4-step RA may be selected, where the two selected parts combine with each other). In an optional specific example, the first characteristic may be RAN slicing-RedCap-4-step RA type.

In some embodiments, the step of selecting a random access resource based on the configuration information and a second characteristic supported by the terminal includes:
selecting the random access resource based on the configuration information, the second characteristic supported by the terminal, and a random access resource selection rule, where the random access resource selection rule includes at least one of the following:
determining a target carrier based on a first selection rule for a carrier, and determining a target bandwidth part based on the target carrier and a second selection rule for a bandwidth part;
determining the target bandwidth part based on the second selection rule for a bandwidth part, and determining a target random access type based on the target bandwidth part and a third selection rule for a random access type;
determining a target downlink reference signal based on a fourth selection rule for a downlink reference signal;
determining a target random access preamble group based on a fifth selection rule for a random access preamble group;
determining the target random access type based on the third selection rule for a random access type, determining the target downlink reference signal based on the fourth selection rule for a downlink reference signal, determining the target random access preamble group based on the fifth selection rule for a random access preamble group, and determining a target random access preamble based on the target random access type, the target downlink reference signal, the target random access preamble group, and a sixth selection rule for a random access preamble; and
determining the target random access type based on the third selection rule for a random access type, determining the target downlink reference signal based on the fourth selection rule for a downlink reference signal, and determining a target random access occasion based on the target random access type, the target downlink reference signal, and a seventh selection rule for a random access occasion.

In some embodiments, if a plurality of (that is, at least two) carriers or BWPs with a random access resource or a common message resource are configured for a serving cell on the network side, UE may determine a carrier or BWP for a random access procedure based on the first selection rule, where the first selection rule may include at least one of the following:
selecting the target carrier for a random access procedure based on a measurement result, for example, performing selection based on an L1-RSRP result corresponding to a downlink pathloss reference (Downlink pathloss reference, DL pathloss reference), where a carrier with the best measurement result (for example, a carrier with a largest L1-RSRP corresponding to the DL pathloss reference) may be selected; or performing selection based on the measurement result and a configured threshold value, for example, selecting a carrier corresponding to a largest or smallest measurement result in all measurement results, selecting a carrier with a measurement result greater than or equal to the threshold value, or selecting a carrier with a measurement result less than the threshold value, where if measurement results corresponding to a plurality of carriers all satisfy the threshold value (that is, greater than or equal to the threshold value, or less than the threshold value), one of all carriers corresponding to measurement results greater than or equal to, or less than the threshold value is randomly selected;
randomly selecting one carrier from a plurality of carriers that are configured by the network side device and that are with a random access resource as the target carrier;
selecting the target carrier for a random access procedure based on first information, where the first information is included in a paging message, a random access response message, or a system message and is used to indicate the target carrier for a random access procedure, for example, the first information is included in downlink control information (Downlink Control Information, DCI), medium access control control signaling (Medium Access Control Control Element, MAC CE), or a physical downlink shared channel (Physical downlink shared channel, PDSCH), and the first information may include an index value of a carrier;
selecting the target carrier for a random access procedure according to a load balancing principle, where in an optional implementation, UE generates one random number, and determines an uplink carrier based on the generated random number and a threshold value, for example, it is assumed that three carriers (for example, a first carrier, a second carrier, and a third carrier) and two threshold values (for example, 0.5 and 0.7) are configured on the network side, and the UE generates one random number (for example, 0.3) within a range of (0,1], the UE selects the first carrier as the target carrier; and
selecting a carrier with a random access resource supporting a third characteristic as the target carrier based on at least one of the second characteristic supported by the terminal, RAN slicing identifier allocation information configured by a network, a motive that triggers a random access procedure, and priority information corresponding to the first characteristic, where the second characteristic or the third characteristic may include at least one of SDT, RedCap, CovEnh, RAN slicing, 2-step RA, and 4-step RA, any two of the first characteristic, the second characteristic, and the third characteristic are the same or different, and the motive that triggers a random access procedure may be SDT triggering or RedCap UE access, where in this embodiment, the priority information corresponding to the first characteristic may be a priority based on any sort order among SDT, RedCap, CovEnh, and RAN slicing, for example, in an optional implementation, the priority information corresponding to the first characteristic may be that Slice (Slice) is of a higher priority than RedCap, RedCap is of a higher priority than SDT, and SDT is of a higher priority than CovEnh; clearly, in another optional implementation, Slice may be of a higher priority than SDT, SDT may be of a higher priority than RedCap, and RedCap may be of a higher priority than CovEnh; RedCap may be of a higher priority than Slice, Slice may be of a higher priority than SDT, and SDT may be of a higher priority than CovEnh; or all are of an equal priority, and the priority information corresponding to the first characteristic is not specifically limited in this application; and
selecting a carrier with a latest available random access resource as the target carrier.

In some embodiments, after the uplink carrier is determined, if there are a plurality of uplink BWPs, with a random access resource, on the selected carrier, the UE may determine an uplink BWP for a random access procedure based on the second selection rule, where the second selection rule includes at least one of the following:
selecting a bandwidth part of a random access resource supporting a third characteristic as the target bandwidth part based on at least one of the second characteristic supported by the terminal, RAN slicing identifier allocation information configured by a network, a motive that triggers a random access procedure, and priority information corresponding to the first characteristic, where the motive that triggers a random access procedure may be RedCap UE random access;
selecting the target bandwidth part for a random access procedure according to a load balancing principle, where in an optional implementation, UE generates one random number, and determines an uplink BWP based on the generated random number and a threshold value, and for example, if it is assumed that three uplink BWPs (for example, a first uplink BWP, a second uplink BWP, and a third uplink BWP) and two threshold values (for example, 0.4 and 0.8) are configured on the network side and the UE generates one random number (for example, 0.5) within a range of (0,1], the UE selects the second uplink BWP as the target BWP; and
randomly selecting one bandwidth part from a plurality of bandwidth parts that are configured by the network side device and that are with a random access resource as the target bandwidth part; and
selecting the target bandwidth part for a random access procedure based on first information, where the first information is included in a paging message, a random access response message, or a system message and is used to indicate the target bandwidth part for a random access procedure, where
the second characteristic or the third characteristic includes at least one of SDT, RedCap, CovEnh, RAN slicing, 2-step RA, and 4-step RA, and any two of the first characteristic, the second characteristic, and the third characteristic are the same or different.

In some embodiments, after the uplink BWP is determined, if there are a plurality of random access resources used for random access procedures for different purposes or of characteristic types, for example, SDT-based 4-step RACH and RedCap-based 4-step RACH, the UE may determine a random access type for a random access procedure based on the third selection rule, where the third selection rule includes:
selecting the target random access type for a random access procedure based on at least one of the second characteristic supported by the terminal, RAN slicing identifier allocation information configured by a network, a motive that triggers the random access procedure, a measurement result, and the configuration information, where the second characteristic includes at least one of SDT, RedCap, CovEnh, RAN slicing, 2-step RA, and 4-step RA, and the first characteristic and the second characteristic are the same or different.

In some embodiments, after the random access type is determined, the UE may determine a DL reference signal for a random access procedure based on the fourth selection rule, where the fourth selection rule includes at least one of the following:
selecting the target downlink reference signal for a random access procedure based on a measurement result and a configured measurement threshold value, for example, performing selection based on a DL pathloss reference or an L1-RSRP result, and a configured threshold; and
selecting one target downlink reference signal from all downlink reference signals associated with a configured random access resource.

In some embodiments, the fifth selection rule includes:
when a first condition is satisfied, selecting a first random access preamble group as the target random access preamble group, where
the first condition includes at least one of the following:
   the first random access preamble group corresponding to the target random access type is configured on a network side;
   an amount of data to be transmitted by the terminal is greater than or equal to a first threshold; and
   a downlink pathloss measurement value of the terminal is less than a second threshold; and
   when the first condition is not satisfied, selecting a second random access preamble group as the target random access preamble group, where the second random access preamble group and the first random access preamble group are different.

In some embodiments, the sixth selection rule includes:
equiprobably and randomly selecting one target random access preamble from the target random access preamble group corresponding to the target random access type, where the target random access preamble has an association relationship with the target downlink reference signal.

In some embodiments, the seventh selection rule includes:
equiprobably and randomly selecting one latest available random access occasion from continuous random access occasions corresponding to the target random access type as the target random access preamble.

In some embodiments, after the step of selecting a random access resource, the method further includes:
performing a random access procedure;
performing a random access type fallback when a random access type selected by the terminal includes a RAN slicing or SDT type (that may be, for example, a RAN slicing-RedCap-4-step RA type) and a preset fallback condition is satisfied in an ongoing random access procedure, and resetting the target random access type (for example, the RAN slicing-RedCap-4-step RA type may fall back to a RedCap-4-step RA type); clearly, in another optional implementation, performing a random access type fallback when a random access type selected by the terminal may be an SDT-RedCap-4-step RA type and a preset fallback condition is satisfied, and resetting the target random access type, that is, the SDT-RedCap-4-step RA type may fall back to a RedCap-4-step RA type; or clearly, in another implementation in this application, performing a random access type fallback when any possible random access type selected by the terminal satisfies a preset fallback condition, and resetting the target random access type; and
reselecting a random access resource based on the target random access type.

In a specific embodiment, it is assumed that UE supports Slice, RedCap, SDT, and CovEnh characteristics at the same time, a random access resource selection method includes the following steps.

Step 0: Relationship configuration information about association between a random access resource and a UE-supported characteristic is configured on a network side. The relationship configuration information includes:
a downlink reference signal associated with the random access resource, for example, an SSB identifier;
random access resource allocation information corresponding to a random access type (for example, 4-step RA), for example, temporal position information (for example, an RO), frequency position information (for example, physical random access channel occasion (Physical Random Access Channel occasion, PRACH occasion) or carrier configuration information), and/or code domain information (for example, a preamble index (index)); and
information about enabling a supported characteristic (for example, a network indicates in a configuration message that a current cell supports SDT and RedCap) and/or priority information corresponding to the characteristic (for example, the characteristic of RedCap is of a higher priority than SDT).

In addition, a measurement threshold configuration for random access resource selection and/or a configuration parameter (for example, a threshold value parameter for triggering UE to perform a random access type fallback) for a random access procedure may further be configured on the network side. The threshold configuration or the parameter may have an association relationship with the UE-supported characteristic (for example, the characteristic of SDT is corresponding to one threshold configuration, the characteristic of RedCap is corresponding to one threshold configuration, and the RedCap-SDT characteristic is corresponding to one threshold configuration). The "measurement" is specific to any one of the following:
an RSRP;
reference signal received quality (Reference Signal Received Quality, RSRQ);
a received signal strength indication (Received Signal Strength Indicator, RSSI); and
a channel occupancy ratio (Channel Occupancy Ratio, CR).

### Step 1: UE initiates a random access procedure and first performs uplink carrier selection.

It is assumed that RAN slicing identifier allocation information configured by a network for the UE is Slice 1 (the UE first selects Slice 1 for access), and it is assumed that, on the network side, a resource supporting SDT and a resource supporting RedCap are configured for an uplink carrier 1, and a resource supporting Slice 1 is configured for an uplink carrier 2. In this case, the UE selects the uplink carrier 2 (the UE first determines a carrier with the resource supporting Slice 1, and uses the carrier with the resource supporting Slice 1 as a target carrier) based on a supported characteristic (it is assumed that the UE supports characteristics of Slice, RedCap, SDT, Slice-RedCap, Slice-SDT, RedCap-SDT, and Slice-RedCap-SDT at the same time) and priority information of the supported characteristic (that may be pre-specified in a protocol, for example, Slice is of a higher priority than RedCap, and RedCap is of a higher priority than SDT). Further, if an uplink carrier 3 is also configured on the network side, and the uplink carrier 3 is also configured with the resource supporting Slice 1, the UE may randomly select one uplink carrier that is either the uplink carrier 2 or the uplink carrier 3, select an uplink carrier with a larger downlink pathloss reference value from the two uplink carriers, or select an uplink carrier based on a measured downlink pathloss reference and a configured threshold value. If a threshold value corresponding to the uplink carrier 2 is less than the downlink pathloss reference that is less than a threshold value corresponding to the uplink carrier 3, the UE selects the uplink carrier 3 as a target uplink carrier. Further, if an uplink carrier 4 is also configured on the network side, and the uplink carrier 4 is also configured with the resource supporting Slice 1 (and includes the resource supporting SDT and the resource supporting RedCap, that is, configured with a resource corresponding to a characteristic of Slice 1-Redcap-SDT), the UE may select the uplink carrier 4. Further, if an uplink carrier 5 is also configured on the network side, and the uplink carrier 5 is also configured with the resource supporting Slice 1 (and includes the resource supporting SDT, that is, configured with a resource corresponding to a characteristic of Slice 1-SDT), the UE may select the uplink carrier 5.

### Step 2: The UE performs uplink BWP selection.

One separate BWP or an initial BWP for non-conventional NR UE access may be allocated on the network side to a random access resource used by RedCap UE. It is assumed that the resource supporting Slice 1 and the resource supporting SDT are configured on the initial BWP and the resource supporting RedCap and the resource supporting SDT are configured on the separate BWP on the network side. In this case, when performing a random access procedure, the UE (that supports RedCap, Slice 1, and SDT at the same time) selects the separate BWP based on a supported characteristic and a priority of the supported characteristic. For example, it is agreed in a protocol that if the separate BWP for the RedCap UE is configured on the selected uplink carrier on the network side, the RedCap UE selects the separate BWP as an uplink BWP.

### Step 3: The UE determines a random access type.

It is assumed that a corresponding resource (that may include a 4-step RO/2-step RO and/or a corresponding preamble group/preamble) is configured on the uplink BWP selected by the UE by the network for each of the characteristics of Slice 1, Redcap, SDT, CovEnh, and the like, and a random access resource corresponding to a characteristic of RAN slicing-Redcap-SDT-CovEnh-4-step RA is further configured. The UE determines that the random access type is a Slice-RedCap-SDT-4-step random access type based on that the UE supports RedCap, the RAN slicing identifier allocation information configured by the network for the UE is Slice 1, and a current random access procedure is triggered by SDT (for example, the UE first determines that a resource corresponding to RAN slicing 1 is configured on the network side, and determines whether a resource corresponding to RedCap includes a resource corresponding to SDT (for example, a 4-step RA resource corresponding to Slice-RedCap-SDT) if the resource corresponding to RAN slicing 1 includes the resource corresponding to RedCap, where if the resource corresponding to RedCap includes the resource corresponding to SDT, the UE determines that a target random access type is Slice-RedCap-SDT-4-step RA). If the network further configures a corresponding 2-step random access resource for the characteristic of Slice-RedCap-SDT, the UE may determine that the target random access type is a Slice-RedCap-SDT-2-step RA random access type based on a measurement result and a configured threshold (for example, the measurement result is greater than a threshold value associated with the combined characteristic of Slice-RedCap-SDT). In addition, if the network configures only the corresponding 2-step random access resource for the characteristic, it is determined that the target random access type is the Slice-RedCap-SDT-2-step RA random access type.

Clearly, in another implementation, the UE may alternatively first determine that a resource corresponding to RedCap is configured on the network side, and determines whether a resource corresponding to RAN slicing 1 includes a resource corresponding to SDT (for example, a 4-step RA resource corresponding to RedCap-Slice-SDT) if the resource corresponding to RedCap includes the resource corresponding to RAN slicing 1, where if the resource corresponding to RAN slicing 1 includes the resource corresponding to SDT, the UE determines that a target random access type is RedCap-Slice-SDT-4-step RA. If the network further configures a corresponding 2-step random access resource for the characteristic of RedCap-Slice-SDT, the UE may determine that the target random access type is a RedCap-Slice-SDT-2-step RA random access type based on a measurement result and a configured threshold (for example, the measurement result is greater than a threshold value associated with the combined characteristic of RedCap-Slice-SDT). In addition, if the network configures only the corresponding 2-step random access resource for the characteristic, it is determined that the target random access type is the RedCap-Slice-SDT-2-step RA random access type.

It should be noted that, in this application, an order of determining resources corresponding to various characteristics is not specifically limited. Specifically, an order of resources corresponding to various characteristics may be selected and determined based on an actual requirement.

Further, the UE may alternatively determine, based on a measurement result and a configured threshold (for example, the measurement result is less than a threshold value associated with a combined characteristic of Slice-RedCap-SDT-CovEnh), that the random access type is a Slice-RedCap-SDT-CovEnh-4-step random access type based on that the UE supports RedCap, network configuration information indicates that the UE belongs to Slice 1, and a current random access procedure is triggered by SDT.

### Step 4: A downlink reference signal is selected.

If the random access type selected by the UE includes at least a CovEnh manner (for example, Slice-RedCap-SDT-CovEnh). One implementation is that the UE measures an L1-RSRP corresponding to at least one SSB that is greater than the configured threshold, and the UE randomly selects one SSB from the at least one SSB. Otherwise, the UE (randomly or equiprobably) selects one downlink reference signal from all downlink reference signals associated with a configured random access resource. Another implementation is that the UE (randomly or equiprobably) selects one downlink reference signal from all downlink reference signals associated with a configured random access resource.

### Step 5 and Step 6: A preamble and an RO are selected.

The UE equiprobably and randomly selects one preamble from all preambles for the selected random access type (for example, all preambles, corresponding to the Slice-RedCap-SDT-4-step RA access type, configured by the network on Slice 1). The UE equiprobably and randomly selects one RO from all continuous ROs for the selected random access type (for example, all continuous ROs, corresponding to the Slice-RedCap-SDT-4-step RA access type, configured by the network on Slice 1).

### Step 7: A random access type fallback is performed.

A random access type fallback is performed if the random access type selected by the UE includes at least a Slicing or SDT manner and a fallback condition is satisfied, and random access resource selection is performed again based on a fallback type. For example, the UE may fall back from a Slice-RedCap-SDT access type to Slice-RedCap. The fallback condition may be that the UE has not completed a random access procedure after having had N times of random access attempts based on the Slice-RedCap-SDT access type, or that the UE receives a fallback indication from the network side. Then, the UE performs random access resource selection again based on the Slice-RedCap type. N is a positive integer.

When a separate random access resource is allocated on the network side to UE supporting SDT, RedCap, and CovEnh and of which network configuration information includes slicing allocation information, in this embodiment, it is ensured that the UE can select a suitable random access resource from a plurality of random access resources and a network side device can accurately identify a service requirement of and a characteristic supported by the UE.

An embodiment of this application further provides a random access resource configuration method, performed by a network side device as shown in FIG. 5 and including:

Step 201: Send configuration information to a terminal, where the configuration information is used to indicate an association relationship between a random access resource configured by the network side device and a first characteristic.

The random access resource includes at least one of the following:
a downlink reference signal, a carrier, a bandwidth part, a random access type, a random access preamble, a random access preamble group, and a random access occasion.

In some embodiments, the configuration information includes at least one of the following:
a downlink reference signal associated with a random access resource corresponding to the first characteristic;
random access resource allocation information corresponding to the first characteristic, including at least one of temporal position information, frequency position information, code domain information, and power domain information;
information about enabling the first characteristic;
priority information corresponding to the first characteristic;
a measurement threshold for random access resource selection; and
a configuration parameter for a random access procedure, where
the measurement threshold or the configuration parameter has an association relationship with the first characteristic.

In some embodiments, the first characteristic includes at least one of small data transmission (SDT), a reduced capability (RedCap) NR device, coverage enhancement (CovEnh), radio access network slicing (RAN slicing), two-step random access (2-step RA), and four-step random access (4-step RA).

It should be noted that the random access resource selection method provided in the embodiments of this application may be performed by a random access resource selection apparatus or a module that is in the random access resource selection apparatus and that is configured to perform and load the random access resource selection method. In this embodiment of this application, that the random access resource selection apparatus performs and loads the random access resource selection method is used as an example to describe the random access resource selection method provided in the embodiments of this application.

An embodiment of this application provides a random access resource selection apparatus, used in a terminal 300. As shown in FIG. 6, the apparatus includes:
a receiving module 310, configured to receive configuration information sent by a network side device, where the configuration information is used to indicate an association relationship between a random access resource configured by the network side device and a first characteristic; and
a selection module 320, configured to select a random access resource based on the configuration information and a second characteristic supported by the terminal.

The random access resource includes at least one of the following:
a downlink reference signal, a carrier, a bandwidth part, a random access type, a random access preamble, a random access preamble group, and a random access occasion.

In some embodiments, the configuration information includes at least one of the following:
a downlink reference signal associated with a random access resource corresponding to the first characteristic;
random access resource allocation information corresponding to the first characteristic, including at least one of temporal position information, frequency position information, code domain information, and power domain information;
information about enabling the first characteristic;
priority information corresponding to the first characteristic;
a measurement threshold for random access resource selection; and
a configuration parameter for a random access procedure, where
the measurement threshold or the configuration parameter has an association relationship with the first characteristic.

In some embodiments, the first characteristic includes at least one of small data transmission (SDT), a reduced capability (RedCap) NR device, coverage enhancement (CovEnh), radio access network slicing (RAN slicing), two-step random access (2-step RA), and four-step random access (4-step RA).

In some embodiments, the selection module is specifically configured to select the random access resource based on the configuration information, the second characteristic supported by the terminal, and a random access resource selection rule, where the random access resource selection rule includes at least one of the following:
determining a target carrier based on a first selection rule for a carrier, and determining a target bandwidth part based on the target carrier and a second selection rule for a bandwidth part;
determining the target bandwidth part based on the second selection rule for a bandwidth part, and determining a target random access type based on the target bandwidth part and a third selection rule for a random access type;
determining a target downlink reference signal based on a fourth selection rule for a downlink reference signal;
determining a target random access preamble group based on a fifth selection rule for a random access preamble group;
determining the target random access type based on the third selection rule for a random access type, determining the target downlink reference signal based on the fourth selection rule for a downlink reference signal, determining the target random access preamble group based on the fifth selection rule for a random access preamble group, and determining a target random access preamble based on the target random access type, the target downlink reference signal, the target random access preamble group, and a sixth selection rule for a random access preamble; and
determining the target random access type based on the third selection rule for a random access type, determining the target downlink reference signal based on the fourth selection rule for a downlink reference signal, and determining a target random access occasion based on the target random access type, the target downlink reference signal, and a seventh selection rule for a random access occasion.

In some embodiments, the first selection rule includes at least one of the following:
selecting the target carrier for a random access procedure based on a measurement result;
randomly selecting one carrier from a plurality of carriers that are configured by the network side device and that are with a random access resource as the target carrier;
selecting the target carrier for a random access procedure based on first information, where the first information is included in a paging message, a random access response message, or a system message and is used to indicate the target carrier for a random access procedure;
selecting the target carrier for a random access procedure according to a load balancing principle;
selecting a carrier with a random access resource supporting a third characteristic as the target carrier based on at least one of the second characteristic supported by the terminal, RAN slicing identifier allocation information configured by a network, a motive that triggers a random access procedure, and priority information corresponding to the first characteristic, where the second characteristic or the third characteristic includes at least one of SDT, RedCap, CovEnh, RAN slicing, 2-step RA, and 4-step RA, and any two of the first characteristic, the second characteristic, and the third characteristic are the same or different; and
selecting a carrier with a latest available random access resource as the target carrier.

In some embodiments, the second selection rule includes at least one of the following:
selecting a bandwidth part of a random access resource supporting a third characteristic as the target bandwidth part based on at least one of the second characteristic supported by the terminal, RAN slicing identifier allocation information configured by a network, a motive that triggers a random access procedure, and priority information corresponding to the first characteristic;
selecting the target bandwidth part for a random access procedure according to a load balancing principle;
randomly selecting one bandwidth part from a plurality of bandwidth parts that are configured by the network side device and that are with a random access resource as the target bandwidth part; and
selecting the target bandwidth part for a random access procedure based on first information, where the first information is included in a paging message, a random access response message, or a system message and is used to indicate the target bandwidth part for a random access procedure, where
the second characteristic or the third characteristic includes at least one of SDT, RedCap, CovEnh, RAN slicing, 2-step RA, and 4-step RA, and any two of the first characteristic, the second characteristic, and the third characteristic are the same or different.

In some embodiments, the third selection rule includes:
selecting the target random access type for a random access procedure based on at least one of the second characteristic supported by the terminal, RAN slicing identifier allocation information configured by a network, a motive that triggers the random access procedure, a measurement result, and the configuration information, where the second characteristic includes at least one of SDT, RedCap, CovEnh, RAN slicing, 2-step RA, and 4-step RA, and the first characteristic and the second characteristic are the same or different.

In some embodiments, the fourth selection rule includes at least one of the following:
selecting the target downlink reference signal for a random access procedure based on a measurement result and a configured measurement threshold value; and
selecting one target downlink reference signal from all downlink reference signals associated with a configured random access resource.

In some embodiments, the fifth selection rule includes:
when a first condition is satisfied, selecting a first random access preamble group as the target random access preamble group, where
the first condition includes at least one of the following:
   the first random access preamble group corresponding to the target random access type is configured on a network side;
   an amount of data to be transmitted by the terminal is greater than or equal to a first threshold; and
   a downlink pathloss measurement value of the terminal is less than a second threshold; and
   when the first condition is not satisfied, selecting a second random access preamble group as the target random access preamble group, where the second random access preamble group and the first random access preamble group are different.

In some embodiments, the sixth selection rule includes:
equiprobably and randomly selecting one target random access preamble from the target random access preamble group corresponding to the target random access type, where the target random access preamble has an association relationship with the target downlink reference signal.

In some embodiments, the seventh selection rule includes:
equiprobably and randomly selecting one latest available random access occasion from continuous random access occasions corresponding to the target random access type as the target random access preamble.

In some embodiments, the apparatus further includes:
a performing module, configured to perform a random access procedure; and
a fallback module, configured to: perform a random access type fallback when a random access type selected by the terminal includes a RAN slicing or SDT type and a preset fallback condition is satisfied in an ongoing random access procedure, and reset the target random access type.

The selection module 320 is further configured to reselect a random access resource based on the target random access type.

The random access resource selection apparatus in this embodiment of this application may be an apparatus or an apparatus or electronic device with an operating system, or may be a component, an integrated circuit, or a chip in a terminal. The apparatus or electronic device may be a mobile terminal, or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (television, TV), an automated teller machine, or a self-service machine. This is not specifically limited in the embodiments of this application.

The random access resource selection apparatus provided in this embodiment of this application can implement the processes implemented in the method embodiment of FIG. 4, and same technical effect can be achieved. To avoid repetition, details are not described herein again.

It should be noted that the random access resource configuration method provided in the embodiments of this application may be performed by a random access resource configuration apparatus or a module that is in the random access resource configuration apparatus and that is configured to perform and load the random access resource configuration method. In this embodiment of this application, that the random access resource configuration apparatus performs and loads the random access resource configuration method is used as an example to describe the random access resource configuration method provided in the embodiments of this application.

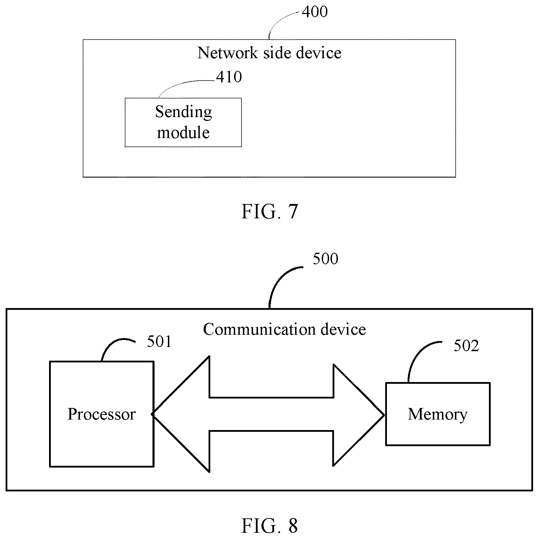

An embodiment of this application provides a random access resource configuration apparatus, used in a network side device 400 as shown in FIG. 7 and includes:
a sending module 410, configured to send configuration information to a terminal, where the configuration information is used to indicate an association relationship between a random access resource configured by the network side device and a first characteristic.

The random access resource includes at least one of the following:
a downlink reference signal, a carrier, a bandwidth part, a random access type, a random access preamble, a random access preamble group, and a random access occasion.

In some embodiments, the configuration information includes at least one of the following:
a downlink reference signal associated with a random access resource corresponding to the first characteristic;
random access resource allocation information corresponding to the first characteristic, including at least one of temporal position information, frequency position information, code domain information, and power domain information;
information about enabling the first characteristic;
priority information corresponding to the first characteristic;
a measurement threshold for random access resource selection; and
a configuration parameter for a random access procedure, where
the measurement threshold or the configuration parameter has an association relationship with the first characteristic.

In some embodiments, the first characteristic includes at least one of small data transmission (SDT), a reduced capability (RedCap) NR device, coverage enhancement (CovEnh), radio access network slicing (RAN slicing), two-step random access (2-step RA), and four-step random access (4-step RA).

The random access resource configuration apparatus provided in this embodiment of this application can implement the processes implemented in the method embodiment of FIG. 5, and same technical effect can be achieved. To avoid repetition, details are not described herein again.

As shown in FIG. 8, an embodiment of this application further provides a communication device 500, including a processor 501, a memory 502, a program or an instruction that is stored in the memory 502 and that is executable on the processor 501. For example, when the communication device 500 is a terminal, the program or the instruction is executed by the processor 501 to implement the processes of the embodiment of the foregoing random access resource selection method applied to the terminal, and same technical effect can be achieved. To avoid repetition, details are not described herein again. When the communication device 500 is a network side device, the program or the instruction is executed by the processor 501 to implement the processes of the embodiment of the foregoing random access resource configuration method applied to the network side device, and same technical effect can be achieved. To avoid repetition, details are not described herein again.

An embodiment of this application further provides a terminal, including a processor and a communication interface. The processor is configured to: receive configuration information sent by a network side device, where the configuration information is used to indicate an association relationship between a random access resource configured by the network side device and a first characteristic; and select a random access resource based on the configuration information and a second characteristic supported by the terminal, where the random access resource includes at least one of the following: a downlink reference signal, a carrier, a bandwidth part, a random access type, a random access preamble, a random access preamble group, and a random access occasion.

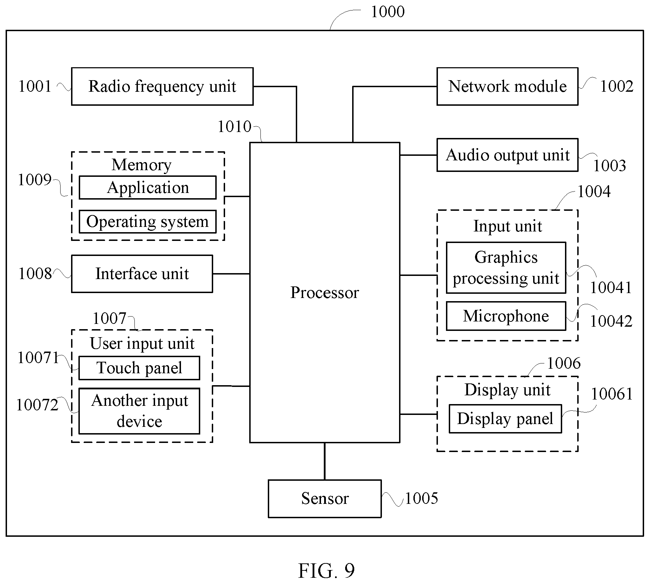

This terminal embodiment is corresponding to the foregoing method embodiment on the terminal side. Each implementation process and implementation of the foregoing method embodiment may be applicable to this terminal embodiment, and same technical effect can be achieved. Specifically, FIG. 9 is a schematic diagram of a hardware structure of a terminal according to an embodiment of this application.

A terminal 1000 includes but is not limited to at least a part of components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

A person skilled in the art can understand that the terminal 1000 may further include a power supply (such as a battery) that supplies power to each component. The power supply may be logically connected to the processor 1010 by using a power supply management system, to implement functions such as charging and discharging management, and power consumption management by using the power supply management system. The terminal structure shown in FIG. 9 constitutes no limitation on the terminal, and the terminal may include more or fewer components than those shown in the figure, or combine some components, or have different component arrangements. Details are not described herein.

It should be understood that, in this embodiment of this application, the input unit 1004 may include a graphics processing unit (Graphics Processing Unit, GPU) 10041 and a microphone 10042, and the graphics processing unit 10041 processes image data of a still picture or a video obtained by an image capture apparatus (such as a camera) in a video capture mode or an image capture mode. The display unit 1006 may include a display panel 10061. Optionally, the display panel 10061 may be configured in a form such as a liquid crystal display or an organic light-emitting diode. The user input unit 1007 includes a touch panel 10071 and another input device 10072. The touch panel 10071 is also referred to as a touchscreen. The touch panel 10071 may include two parts: a touch detection apparatus and a touch controller. The another input device 10072 may include but is not limited to a physical keyboard, a functional button (such as a volume control button or a power on/off button), a trackball, a mouse, and a joystick. Details are not described herein.

In this embodiment of this application, the radio frequency unit 1001 receives downlink data from a network side device and then sends the downlink data to the processor 1010 for processing; and sends uplink data to the network side device. Usually, the radio frequency unit 1001 includes but is not limited to an antenna, at least one amplifier, a transceiver, a coupler, a low noise amplifier, a duplexer, and the like.

The memory 1009 may be configured to store a software program or an instruction and various data. The memory 1009 may mainly include a program or instruction storage area and a data storage area. The program or instruction storage area may store an operating system, and an application or an instruction required by at least one function (for example, a sound playing function or an image playing function). In addition, the memory 1009 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 1010 may include one or more processing units. Optionally, an application processor and a modem processor may be integrated into the processor 1010. The application processor mainly processes an operating system, a user interface, an application, an instruction, or the like. The modem processor mainly processes wireless communication, for example, a baseband processor. It can be understood that, alternatively, the modem processor may not be integrated into the processor 1010.

The processor 1010 is configured to: receive configuration information sent by a network side device, where the configuration information is used to indicate an association relationship between a random access resource configured by the network side device and a first characteristic; and
select a random access resource based on the configuration information and a second characteristic supported by the terminal.

The random access resource includes at least one of the following:
a downlink reference signal, a carrier, a bandwidth part, a random access type, a random access preamble, a random access preamble group, and a random access occasion.

In some embodiments, the configuration information includes at least one of the following:
a downlink reference signal associated with a random access resource corresponding to the first characteristic;
random access resource allocation information corresponding to the first characteristic, including at least one of temporal position information, frequency position information, code domain information, and power domain information;
information about enabling the first characteristic;
priority information corresponding to the first characteristic;
a measurement threshold for random access resource selection; and
a configuration parameter for a random access procedure, where
the measurement threshold or the configuration parameter has an association relationship with the first characteristic.

In some embodiments, the first characteristic includes at least one of small data transmission (SDT), a reduced capability (RedCap) NR device, coverage enhancement (CovEnh), radio access network slicing (RAN slicing), two-step random access (2-step RA), and four-step random access (4-step RA).

In some embodiments, the processor 1010 is configured to select the random access resource based on the configuration information, the second characteristic supported by the terminal, and a random access resource selection rule, where the random access resource selection rule includes at least one of the following:
determining a target carrier based on a first selection rule for a carrier, and determining a target bandwidth part based on the target carrier and a second selection rule for a bandwidth part;
determining the target bandwidth part based on the second selection rule for a bandwidth part, and determining a target random access type based on the target bandwidth part and a third selection rule for a random access type;
determining a target downlink reference signal based on a fourth selection rule for a downlink reference signal;
determining a target random access preamble group based on a fifth selection rule for a random access preamble group;
determining the target random access type based on the third selection rule for a random access type, determining the target downlink reference signal based on the fourth selection rule for a downlink reference signal, determining the target random access preamble group based on the fifth selection rule for a random access preamble group, and determining a target random access preamble based on the target random access type, the target downlink reference signal, the target random access preamble group, and a sixth selection rule for a random access preamble; and
determining the target random access type based on the third selection rule for a random access type, determining the target downlink reference signal based on the fourth selection rule for a downlink reference signal, and determining a target random access occasion based on the target random access type, the target downlink reference signal, and a seventh selection rule for a random access occasion.

In some embodiments, the first selection rule includes at least one of the following:
selecting the target carrier for a random access procedure based on a measurement result;
randomly selecting one carrier from a plurality of carriers that are configured by the network side device and that are with a random access resource as the target carrier;
selecting the target carrier for a random access procedure based on first information, where the first information is included in a paging message, a random access response message, or a system message and is used to indicate the target carrier for a random access procedure;
selecting the target carrier for a random access procedure according to a load balancing principle;
selecting a carrier with a random access resource supporting a third characteristic as the target carrier based on at least one of the second characteristic supported by the terminal, RAN slicing identifier allocation information configured by a network, a motive that triggers a random access procedure, and priority information corresponding to the first characteristic, where the second characteristic or the third characteristic includes at least one of SDT, RedCap, CovEnh, RAN slicing, 2-step RA, and 4-step RA, and any two of the first characteristic, the second characteristic, and the third characteristic are the same or different; and
selecting a carrier with a latest available random access resource as the target carrier.

In some embodiments, the second selection rule includes at least one of the following:
selecting a bandwidth part of a random access resource supporting a third characteristic as the target bandwidth part based on at least one of the second characteristic supported by the terminal, RAN slicing identifier allocation information configured by a network, a motive that triggers a random access procedure, and priority information corresponding to the first characteristic;
selecting the target bandwidth part for a random access procedure according to a load balancing principle;
randomly selecting one bandwidth part from a plurality of bandwidth parts that are configured by the network side device and that are with a random access resource as the target bandwidth part; and
selecting the target bandwidth part for a random access procedure based on first information, where the first information is included in a paging message, a random access response message, or a system message and is used to indicate the target bandwidth part for a random access procedure, where
the second characteristic or the third characteristic includes at least one of SDT, RedCap, CovEnh, RAN slicing, 2-step RA, and 4-step RA, and any two of the first characteristic, the second characteristic, and the third characteristic are the same or different.

In some embodiments, the third selection rule includes:
selecting the target random access type for a random access procedure based on at least one of the second characteristic supported by the terminal, RAN slicing identifier allocation information configured by a network, a motive that triggers the random access procedure, a measurement result, and the configuration information, where the second characteristic includes at least one of SDT, RedCap, CovEnh, RAN slicing, 2-step RA, and 4-step RA, and the first characteristic and the second characteristic are the same or different.

In some embodiments, the fourth selection rule includes at least one of the following:
selecting the target downlink reference signal for a random access procedure based on a measurement result and a configured measurement threshold value; and
selecting one target downlink reference signal from all downlink reference signals associated with a configured random access resource.

In some embodiments, the fifth selection rule includes:
when a first condition is satisfied, selecting a first random access preamble group as the target random access preamble group, where
the first condition includes at least one of the following:
   the first random access preamble group corresponding to the target random access type is configured on a network side;
   an amount of data to be transmitted by the terminal is greater than or equal to a first threshold; and
   a downlink pathloss measurement value of the terminal is less than a second threshold; and
   when the first condition is not satisfied, selecting a second random access preamble group as the target random access preamble group, where the second random access preamble group and the first random access preamble group are different.

In some embodiments, the sixth selection rule includes:
equiprobably and randomly selecting one target random access preamble from the target random access preamble group corresponding to the target random access type, where the target random access preamble has an association relationship with the target downlink reference signal.

In some embodiments, the seventh selection rule includes:
equiprobably and randomly selecting one latest available random access occasion from continuous random access occasions corresponding to the target random access type as the target random access preamble.

In some embodiments, the processor 1010 is configured to: perform a random access procedure; perform a random access type fallback when a random access type selected by the terminal includes a RAN slicing or SDT type and a preset fallback condition is satisfied in an ongoing random access procedure, and reset the target random access type; and reselect a random access resource based on the target random access type.

An embodiment of this application further provides a network side device, including a processor and a communication interface. The communication interface is configured to send configuration information to a terminal, where the configuration information is used to indicate an association relationship between a random access resource configured by the network side device and a first characteristic. The random access resource includes at least one of the following: a downlink reference signal, a carrier, a bandwidth part, a random access type, a random access preamble, a random access preamble group, and a random access occasion. This network side device embodiment is corresponding to the foregoing method embodiment on the network side device. Each implementation process and implementation of the foregoing method embodiment may be applicable to this network side device embodiment, and same technical effect can be achieved.

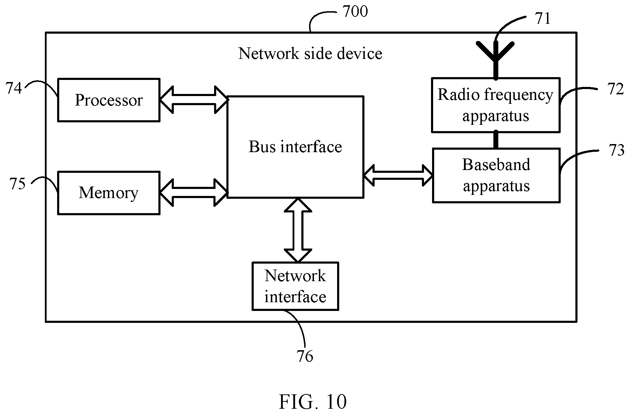

Specifically, an embodiment of this application further provides a network side device. As shown in FIG. 10, a network device 700 includes an antenna 71, a radio frequency apparatus 72, and a baseband apparatus 73. The antenna 71 is connected to the radio frequency apparatus 72. In an uplink direction, the radio frequency apparatus 72 receives information by using the antenna 71, and sends the received information to the baseband apparatus 73 for processing. In a downlink direction, the baseband apparatus 73 processes information that needs to be sent, and sends processed information to the radio frequency apparatus 72. The radio frequency apparatus 72 processes the received information, and sends processed information by using the antenna 71.

The frequency band processing apparatus may be located in the baseband apparatus 73. The method performed by the network side device in the foregoing embodiment may be implemented in the baseband apparatus 73. The baseband apparatus 73 includes a processor 74 and a memory 75.

The baseband apparatus 73 may include, for example, at least one baseband board, where a plurality of chips are disposed on the baseband board. As shown in FIG. 10, one chip is, for example, the processor 74, which is connected to the memory 75, so as to invoke a program in the memory 75 to perform operations of the network device shown in the foregoing method embodiment.

The baseband apparatus 73 may further include a network interface 76, configured to exchange information with the radio frequency apparatus 72, where the interface is, for example, a common public radio interface (common public radio interface, CPRI).

Specifically, the network side device in this embodiment of the present invention further includes an instruction or a program that is stored in the memory 75 and that can be run on the processor 74. The processor 74 invokes the instruction or the program in the memory 75 to perform the method performed by the modules shown in FIG. 7, and same technical effect is achieved. To avoid repetition, details are not described herein again.

An embodiment of this application further provides a readable storage medium. The readable storage medium may be non-volatile or volatile. The readable storage medium stores a program or an instruction. When the program or the instruction is executed by a processor, the processes of the foregoing embodiment of the random access resource selection method or the random access resource configuration method, and same technical effect can be achieved. To avoid repetition, details are not described herein again.

The processor is a processor in the terminal in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip. The chip includes a processor and a communication interface, and the communication interface is coupled to the processor. The processor is configured to run a program or an instruction to implement the processes of the foregoing embodiment of the random access resource selection method or the random access resource configuration method, and same technical effect can be achieved. To avoid repetition, details are not described herein again.

It should be understood that the chip mentioned in this embodiment of this application may also be referred to as a system-level chip, a system chip, a chip system, or an on-chip system chip.

An embodiment of this application further provides a computer program/program product, the computer program/program product is stored in a non-transitory storage medium, and the computer program/program product is executed by at least one processor to implement the processes of the foregoing embodiment of the random access resource selection method or the random access resource configuration method, and same technical effect can be achieved. To avoid repetition, details are not described herein again.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a computer software product. The computer software product is stored in a storage medium (such as a ROM/RAM, a hard disk, or an optical disc), and includes several instructions for instructing a terminal (which may be a mobile phone, a computer, a server, an air-conditioner, a network device, or the like) to perform the method described in the embodiments of this application.

The embodiments of this application are described above with reference to the accompanying drawings, but this application is not limited to the foregoing specific implementations, and the foregoing specific implementations are only illustrative and not restrictive. Enlightened by this application, a person of ordinary skill in the art can make many forms without departing from the purpose of this application and the protection scope of the claims, all of which fall within the protection of this application.

## Claims

1. A random access resource selection method, performed by a terminal and comprising:
receiving configuration information sent by a network side device, wherein the configuration information is used to indicate an association relationship between a random access resource configured by the network side device and a first characteristic; and
selecting a random access resource based on the configuration information and a second characteristic supported by the terminal, wherein
the random access resource comprises at least one of the following:
a downlink reference signal, a carrier, a bandwidth part, a random access type, a random access preamble, a random access preamble group, and a random access occasion.

2. The method according to claim 1, wherein the configuration information comprises at least one of the following:
a downlink reference signal associated with a random access resource corresponding to the first characteristic;
random access resource allocation information corresponding to the first characteristic, comprising at least one of temporal position information, frequency position information, code domain information, and power domain information;
information about enabling the first characteristic;
priority information corresponding to the first characteristic;
a measurement threshold for random access resource selection; and
a configuration parameter for a random access procedure, wherein
the measurement threshold or the configuration parameter has an association relationship with the first characteristic.

3. The method according to claim 1, wherein the first characteristic comprises at least one of small data transmission (SDT), a reduced capability (RedCap) NR device, coverage enhancement (CovEnh), radio access network slicing (RAN slicing), two-step random access (2-step RA), and four-step random access (4-step RA).

4. The method according to claim 1, wherein the step of selecting a random access resource based on the configuration information and a second characteristic supported by the terminal comprises:
selecting the random access resource based on the configuration information, the second characteristic supported by the terminal, and a random access resource selection rule, wherein the random access resource selection rule comprises at least one of the following:
determining a target carrier based on a first selection rule for a carrier, and determining a target bandwidth part based on the target carrier and a second selection rule for a bandwidth part;
determining the target bandwidth part based on the second selection rule for a bandwidth part, and determining a target random access type based on the target bandwidth part and a third selection rule for a random access type;
determining a target downlink reference signal based on a fourth selection rule for a downlink reference signal;
determining a target random access preamble group based on a fifth selection rule for a random access preamble group;
determining the target random access type based on the third selection rule for a random access type, determining the target downlink reference signal based on the fourth selection rule for a downlink reference signal, determining the target random access preamble group based on the fifth selection rule for a random access preamble group, and determining a target random access preamble based on the target random access type, the target downlink reference signal, the target random access preamble group, and a sixth selection rule for a random access preamble; and
determining the target random access type based on the third selection rule for a random access type, determining the target downlink reference signal based on the fourth selection rule for a downlink reference signal, and determining a target random access occasion based on the target random access type, the target downlink reference signal, and a seventh selection rule for a random access occasion.

5. The method according to claim 4, wherein the first selection rule comprises at least one of the following:
selecting the target carrier for a random access procedure based on a measurement result;
randomly selecting one carrier from a plurality of carriers that are configured by the network side device and that are with a random access resource as the target carrier;
selecting the target carrier for a random access procedure based on first information, wherein the first information is comprised in a paging message, a random access response message, or a system message and is used to indicate the target carrier for a random access procedure;
selecting the target carrier for a random access procedure according to a load balancing principle;
selecting a carrier with a random access resource supporting a third characteristic as the target carrier based on at least one of the second characteristic supported by the terminal, RAN slicing identifier allocation information configured by a network, a motive that triggers a random access procedure, and priority information corresponding to the first characteristic, wherein the second characteristic or the third characteristic comprises at least one of SDT, RedCap, CovEnh, RAN slicing, 2-step RA, and 4-step RA, and any two of the first characteristic, the second characteristic, and the third characteristic are the same or different; and
selecting a carrier with a latest available random access resource as the target carrier.

6. The random access resource selection method according to claim 4, wherein the second selection rule comprises at least one of the following:
selecting a bandwidth part of a random access resource supporting a third characteristic as the target bandwidth part based on at least one of the second characteristic supported by the terminal, RAN slicing identifier allocation information configured by a network, a motive that triggers a random access procedure, and priority information corresponding to the first characteristic;
selecting the target bandwidth part for a random access procedure according to a load balancing principle;
randomly selecting one bandwidth part from a plurality of bandwidth parts that are configured by the network side device and that are with a random access resource as the target bandwidth part; and
selecting the target bandwidth part for a random access procedure based on first information, wherein the first information is comprised in a paging message, a random access response message, or a system message and is used to indicate the target bandwidth part for a random access procedure, wherein
the second characteristic or the third characteristic comprises at least one of SDT, RedCap, CovEnh, RAN slicing, 2-step RA, and 4-step RA, and any two of the first characteristic, the second characteristic, and the third characteristic are the same or different.

7. The random access resource selection method according to claim 4, wherein the third selection rule comprises:
selecting the target random access type for a random access procedure based on at least one of the second characteristic supported by the terminal, RAN slicing identifier allocation information configured by a network, a motive that triggers the random access procedure, a measurement result, and the configuration information, wherein the second characteristic comprises at least one of SDT, RedCap, CovEnh, RAN slicing, 2-step RA, and 4-step RA, and the first characteristic and the second characteristic are the same or different.

8. The random access resource selection method according to claim 4, wherein the fourth selection rule comprises at least one of the following:
selecting the target downlink reference signal for a random access procedure based on a measurement result and a configured measurement threshold value; and
selecting one target downlink reference signal from all downlink reference signals associated with a configured random access resource.

9. The random access resource selection method according to claim 4 or 7, wherein the fifth selection rule comprises:
when a first condition is satisfied, selecting a first random access preamble group as the target random access preamble group, wherein
the first condition comprises at least one of the following:
the first random access preamble group corresponding to the target random access type is configured on a network side;
an amount of data to be transmitted by the terminal is greater than or equal to a first threshold; and
a downlink pathloss measurement value of the terminal is less than a second threshold; and
when the first condition is not satisfied, selecting a second random access preamble group as the target random access preamble group, wherein the second random access preamble group and the first random access preamble group are different.

10. The random access resource selection method according to claim 9, wherein the sixth selection rule comprises:
equiprobably and randomly selecting one target random access preamble from the target random access preamble group corresponding to the target random access type, wherein the target random access preamble has an association relationship with the target downlink reference signal.

11. The random access resource selection method according to claim 4, wherein the seventh selection rule comprises:
equiprobably and randomly selecting one latest available random access occasion from continuous random access occasions corresponding to the target random access type as the target random access preamble.

12. The random access resource selection method according to claim 1, wherein after the step of selecting a random access resource, the method further comprises:
performing a random access procedure;
performing a random access type fallback when a random access type selected by the terminal comprises a RAN slicing or SDT type and a preset fallback condition is satisfied in an ongoing random access procedure, and resetting the target random access type; and
reselecting a random access resource based on the target random access type.

13. A random access resource selection apparatus, used in a terminal and comprising:
a receiving module, configured to receive configuration information sent by a network side device, wherein the configuration information is used to indicate an association relationship between a random access resource configured by the network side device and a first characteristic; and
a selection module, configured to select a random access resource based on the configuration information and a second characteristic supported by the terminal, wherein
the random access resource comprises at least one of the following:
a downlink reference signal, a carrier, a bandwidth part, a random access type, a random access preamble, a random access preamble group, and a random access occasion.

14. The apparatus according to claim 13, wherein the configuration information comprises at least one of the following:
a downlink reference signal associated with a random access resource corresponding to the first characteristic;
random access resource allocation information corresponding to the first characteristic, comprising at least one of temporal position information, frequency position information, code domain information, and power domain information;
information about enabling the first characteristic;
priority information corresponding to the first characteristic;
a measurement threshold for random access resource selection; and
a configuration parameter for a random access procedure, wherein
the measurement threshold or the configuration parameter has an association relationship with the first characteristic.

15. The apparatus according to claim 13, wherein the first characteristic comprises at least one of small data transmission (SDT), a reduced capability (RedCap) NR device, coverage enhancement (CovEnh), radio access network slicing (RAN slicing), two-step random access (2-step RA), and four-step random access (4-step RA).

16. The apparatus according to claim 13, wherein
the selection module is specifically configured to select the random access resource based on the configuration information, the second characteristic supported by the terminal, and a random access resource selection rule, wherein the random access resource selection rule comprises at least one of the following:
determining a target carrier based on a first selection rule for a carrier, and determining a target bandwidth part based on the target carrier and a second selection rule for a bandwidth part;
determining the target bandwidth part based on the second selection rule for a bandwidth part, and determining a target random access type based on the target bandwidth part and a third selection rule for a random access type;
determining a target downlink reference signal based on a fourth selection rule for a downlink reference signal;
determining a target random access preamble group based on a fifth selection rule for a random access preamble group;
determining the target random access type based on the third selection rule for a random access type, determining the target downlink reference signal based on the fourth selection rule for a downlink reference signal, determining the target random access preamble group based on the fifth selection rule for a random access preamble group, and determining a target random access preamble based on the target random access type, the target downlink reference signal, the target random access preamble group, and a sixth selection rule for a random access preamble; and
determining the target random access type based on the third selection rule for a random access type, determining the target downlink reference signal based on the fourth selection rule for a downlink reference signal, and determining a target random access occasion based on the target random access type, the target downlink reference signal, and a seventh selection rule for a random access occasion.

17. The apparatus according to claim 16, wherein the first selection rule comprises at least one of the following:
selecting the target carrier for a random access procedure based on a measurement result;
randomly selecting one carrier from a plurality of carriers that are configured by the network side device and that are with a random access resource as the target carrier;
selecting the target carrier for a random access procedure based on first information, wherein the first information is comprised in a paging message, a random access response message, or a system message and is used to indicate the target carrier for a random access procedure;
selecting the target carrier for a random access procedure according to a load balancing principle;
selecting a carrier with a random access resource supporting a third characteristic as the target carrier based on at least one of the second characteristic supported by the terminal, RAN slicing identifier allocation information configured by a network, a motive that triggers a random access procedure, and priority information corresponding to the first characteristic, wherein the second characteristic or the third characteristic comprises at least one of SDT, RedCap, CovEnh, RAN slicing, 2-step RA, and 4-step RA, and any two of the first characteristic, the second characteristic, and the third characteristic are the same or different; and
selecting a carrier with a latest available random access resource as the target carrier.

18. The random access resource selection apparatus according to claim 16, wherein the second selection rule comprises at least one of the following:
selecting a bandwidth part of a random access resource supporting a third characteristic as the target bandwidth part based on at least one of the second characteristic supported by the terminal, RAN slicing identifier allocation information configured by a network, a motive that triggers a random access procedure, and priority information corresponding to the first characteristic;
selecting the target bandwidth part for a random access procedure according to a load balancing principle;
randomly selecting one bandwidth part from a plurality of bandwidth parts that are configured by the network side device and that are with a random access resource as the target bandwidth part; and
selecting the target bandwidth part for a random access procedure based on first information, wherein the first information is comprised in a paging message, a random access response message, or a system message and is used to indicate the target bandwidth part for a random access procedure, wherein
the second characteristic or the third characteristic comprises at least one of SDT, RedCap, CovEnh, RAN slicing, 2-step RA, and 4-step RA, and any two of the first characteristic, the second characteristic, and the third characteristic are the same or different.

19. The random access resource selection apparatus according to claim 16, wherein the third selection rule comprises:
selecting the target random access type for a random access procedure based on at least one of the second characteristic supported by the terminal, RAN slicing identifier allocation information configured by a network, a motive that triggers the random access procedure, a measurement result, and the configuration information, wherein the second characteristic comprises at least one of SDT, RedCap, CovEnh, RAN slicing, 2-step RA, and 4-step RA, and the first characteristic and the second characteristic are the same or different.

20. The random access resource selection apparatus according to claim 16, wherein the fourth selection rule comprises at least one of the following:
selecting the target downlink reference signal for a random access procedure based on a measurement result and a configured measurement threshold value; and
selecting one target downlink reference signal from all downlink reference signals associated with a configured random access resource.

21. The random access resource selection apparatus according to claim 16 or 19, wherein the fifth selection rule comprises:
when a first condition is satisfied, selecting a first random access preamble group as the target random access preamble group, wherein
the first condition comprises at least one of the following:
the first random access preamble group corresponding to the target random access type is configured on a network side;
an amount of data to be transmitted by the terminal is greater than or equal to a first threshold; and
a downlink pathloss measurement value of the terminal is less than a second threshold; and
when the first condition is not satisfied, selecting a second random access preamble group as the target random access preamble group, wherein the second random access preamble group and the first random access preamble group are different.

22. The random access resource selection apparatus according to claim 21, wherein the sixth selection rule comprises:
equiprobably and randomly selecting one target random access preamble from the target random access preamble group corresponding to the target random access type, wherein the target random access preamble has an association relationship with the target downlink reference signal.

23. The random access resource selection apparatus according to claim 16, wherein the seventh selection rule comprises:
equiprobably and randomly selecting one latest available random access occasion from continuous random access occasions corresponding to the target random access type as the target random access preamble.

24. The random access resource selection apparatus according to claim 13, wherein the apparatus further comprises:
a performing module, configured to perform a random access procedure; and
a fallback module, configured to: perform a random access type fallback when a random access type selected by the terminal comprises a RAN slicing or SDT type and a preset fallback condition is satisfied in an ongoing random access procedure, and reset the target random access type, wherein
the selection module is further configured to reselect a random access resource based on the target random access type.

25. A random access resource configuration method, performed by a network side device and comprising:
sending configuration information to a terminal, wherein the configuration information is used to indicate an association relationship between a random access resource configured by the network side device and a first characteristic; and
the random access resource comprises at least one of the following:
a downlink reference signal, a carrier, a bandwidth part, a random access type, a random access preamble, a random access preamble group, and a random access occasion.

26. The method according to claim 25, wherein the configuration information comprises at least one of the following:
a downlink reference signal associated with a random access resource corresponding to the first characteristic;
random access resource allocation information corresponding to the first characteristic, comprising at least one of temporal position information, frequency position information, code domain information, and power domain information;
information about enabling the first characteristic;
priority information corresponding to the first characteristic;
a measurement threshold for random access resource selection; and
a configuration parameter for a random access procedure, wherein
the measurement threshold or the configuration parameter has an association relationship with the first characteristic.

27. The method according to claim 25, wherein the first characteristic comprises at least one of small data transmission (SDT), a reduced capability (RedCap) NR device, coverage enhancement (CovEnh), radio access network slicing (RAN slicing), two-step random access (2-step RA), and four-step random access (4-step RA).

28. A random access resource configuration apparatus, used in a network side device and comprising:
a sending module, configured to send configuration information to a terminal, wherein the configuration information is used to indicate an association relationship between a random access resource configured by the network side device and a first characteristic; and
the random access resource comprises at least one of the following:
a downlink reference signal, a carrier, a bandwidth part, a random access type, a random access preamble, a random access preamble group, and a random access occasion.

29. The apparatus according to claim 28, wherein the configuration information comprises at least one of the following:
a downlink reference signal associated with a random access resource corresponding to the first characteristic;
random access resource allocation information corresponding to the first characteristic, comprising at least one of temporal position information, frequency position information, code domain information, and power domain information;
information about enabling the first characteristic;
priority information corresponding to the first characteristic;
a measurement threshold for random access resource selection; and
a configuration parameter for a random access procedure, wherein
the measurement threshold or the configuration parameter has an association relationship with the first characteristic.

30. The apparatus according to claim 28, wherein the first characteristic comprises at least one of small data transmission (SDT), a reduced capability (RedCap) NR device, coverage enhancement (CovEnh), radio access network slicing (RAN slicing), two-step random access (2-step RA), and four-step random access (4-step RA).

31. A terminal, comprising a processor, a memory, and a program or an instruction that is stored in the memory and that is executable on the processor, wherein when the program or the instruction is executed by the processor, steps of the random access resource selection method according to any one of claims 1 to 12 are implemented.

32. A network side device, comprising a processor, a memory, and a program or an instruction that is stored in the memory and that is executable on the processor, wherein when the program or the instruction is executed by the processor, steps of the random access resource configuration method according to any one of claims 25 to 27 are implemented.

33. A readable storage medium, wherein the readable storage medium stores a program or an instruction, and when the program or the instruction is executed by a processor, steps of the random access resource selection method according to any one of claims 1 to 12 are implemented, or steps of the random access resource configuration method according to any one of claims 25 to 27 are implemented.

34. A chip, comprising a processor and a communication interface, wherein the communication interface is coupled to the processor, and the processor is configured to run a program or an instruction to implement steps of the random access resource selection method according to any one of claims 1 to 12 or steps of the random access resource configuration method according to any one of claims 25 to 27.

35. A computer program product, wherein the computer program product is stored in a non-transitory readable storage medium, and the computer program product is executed by at least one processor to implement steps of the random access resource selection method according to any one of claims 1 to 12, or the computer program product is executed by at least one processor to implement steps of the random access resource configuration method according to any one of claims 25 to 27.

36. A communication device, configured to perform steps of the random access resource selection method according to any one of claims 1 to 12 or steps of the random access resource configuration method according to any one of claims 25 to 27.
